# EUROPÄISCHE PATENTSCHRIFT

(11) **EP 0 662 184 B1**
(45) Veröffentlichungstag und Bekanntmachung des Hinweises auf die Patenterteilung: **25.03.1998**
(21) Anmeldenummer: 95906204.3
(22) Anmeldetag: 12.07.1994
(51) Int. Cl.: E04H 6/28

(54) **AUTOMATISCHES PARKHAUS**
AUTOMATIC MULTISTOREY CARPARK
GARAGE AUTOMATIQUE A ETAGES MULTIPLES

(30) Priorität: 15.07.1993 CH 2127/93
(43) Veröffentlichungstag der Anmeldung: 12.07.1995
(73) Patentinhaber: Wagner, Jacek, 8305 Dietlikon (CH)
(72) Erfinder: Wagner, Jacek, 8305 Dietlikon (CH)
(86) Internationale Anmeldenummer: CH9400147
(87) Internationale Veröffentlichungsnummer: WO9502740

(56) Entgegenhaltungen:
- WO-A-91/16515
- DE-A- 3 810 116
- GB-A- 1 208 166
- US-A- 4 039 089
- PATENT ABSTRACTS OF JAPAN vol. 14, no. 285 (M-0987) 20. Juni 1990 & JP,A,20 088 853 (FURUKAWA) 29. März 1990

## Beschreibung

Die Erfindung betrifft ein zylinderförmiges Parkhaus nach dem Oberbegriff des Patentanspruches 1 gemäß US-A-4 039089 Parkhäuser sind bereits aus den Schriften D0306058 und PCT/IT/91/00027 bekannt. Das in der Schrift PCT/IT/91/00027 dargestellte Parkhaus verfügt über einen Drehturm mit vier Lifien. Die Lifte könnnen sich entlang des Drehturmes unabhängig voneinander bewegen. Die Winkel zwischen den Liften sind aber fest. Das in der Schrift US-A- 4 039089 dargestellte Parkhaus verfügt über drei Autofördereinrichtungen in Form von Lifttürmen, die sich auf eigenen Rädern auf einer kreisförmigen Fahrbahn um die zentrale Säule sich bewegen können.

Die Lösung etwa aus der Schrift PCT/IT/91/00027 bringt vier entscheidende Nachteile mit sich.
1.Wenn der Drehturm ausfällt, bleibt die ganze Anlage gesperrt.
2.Das Durchsatzvermögen von Fahrzeugen ist beschränkt, weil nur ein Fahrzeug auf einmal eingeschleust bzw. ausgestellt werden kann.
3.Um das Durchsatzvermögen zu erhöhen, muss der Durchmesser des Parkhauses dahingehend angepasst werden, dass dergleichzeitige Einsatz von allen Liften möglich ist. Dies erlaubt aber 3.1 keine optimale Ausnützung der zur Verfugung stehenden (teuren) Bodenfläche.
3.2 die Wahrscheinlichkeit für die gleichzeitige Bediennung von mehreren Fahrzeugen ist trotzdem nicht sehr gross.
4.Vorgeschriebene Servicearbeiten an dem Drehturm behindern entscheidend die Arbeit des Parkhauses und können dadurch sehr teuer werden.

Aufgabe dieser Erfindung ist es, diese Nachteile zu beheben.

Es sollte jeder Parkplatz weitgehend ohne Einschränkungen jederzeit zugänglich und bedienbar sein.

Dies kann bei einem Parkhaus der eingangs gennanten Art erreicht werden, welches die Merkmale der Kennzeichnung des Patentanspruches 1 aufweist. Durch die Konstruktion wird erreicht, dass mehrere Autofördereinrichtungen gleichzeitig und weitgehend unabhängig voneinader um die Mittelachse sich drehen können. Die einzige Einschränkung ist, dass die Autofördereinrichtungen nicht aneinander vorbei passieren können. Jede der Autofördereinrichtungen ist mit einem Lift und Antriebseinheiten ausgestattet. Dadurch ist die Gefahr, dass das ganze Parkhaus durch einen Defekt des Drehturmes ausser Betrieb gesetzt wird, eliminiert.

Das Durchsatzvermögen ist entscheidend grösser, weil es fast immer möglich ist, gleichzeitig alle Autofördereinrichtungen für das Bedienen von Fahrzeugen einzusetzen, insbesondere dann, wenn die Abläufe durch Computereinsatz unterstützt werden.

Eine optimale Anpassung der Parkhausgrösse an die zur Verfügung stehende Bodenfläche ist möglich.

Eine Ausführung von vorgeschriebenen Servicearbeiten am ganzen System ist problemlos möglich.

Im foglenden wird ein Ausführungsbeispiel der Erfindung anhand der Zeichnungen näher erläutert.

Es zeigen:

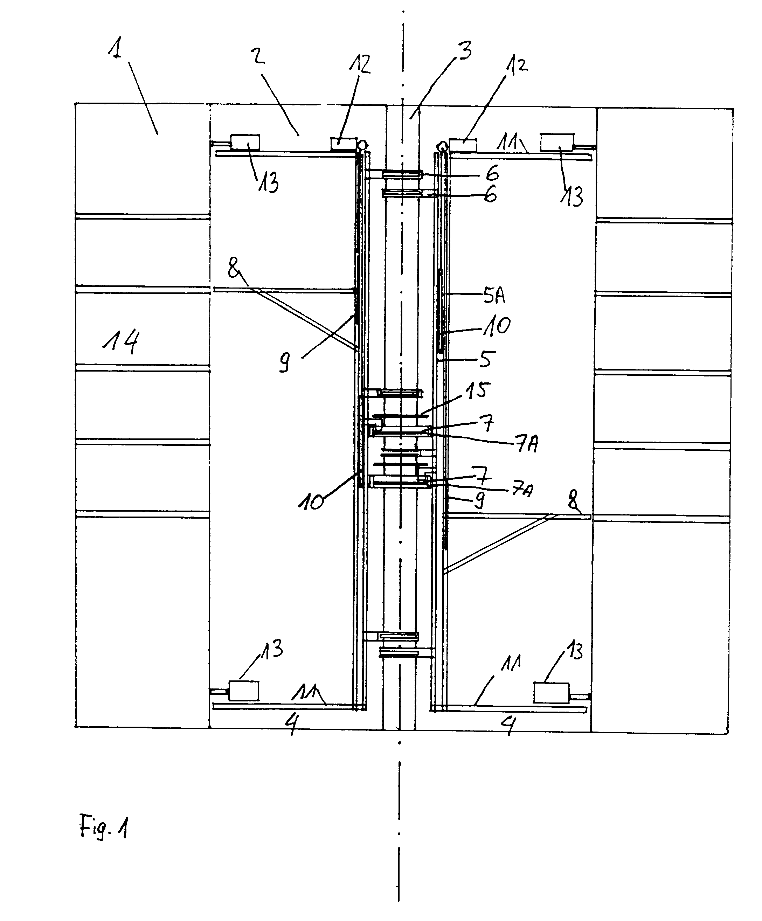

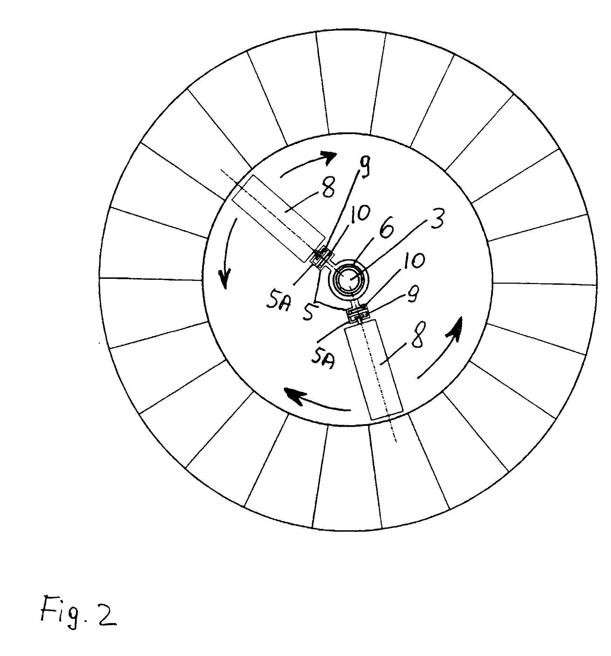

Fig.1:Einen vertikalen Querschnitt durch das Parkhaus mit der zentralen Säule und zwei unabhängigen Autofödereinrichtungen. Fig.2:Einen horizontalen Querschnitt durch das Parkhaus mit der zentralen Säule und zwei unabhängigen Autofödereinrichtungen.

Das bevorzugte System besteht aus vier Autofördereinrichtungen 4. Das Gewicht jeder Autofördereinrichtung ruht auf dem eigenen axialen Segmentlager 7 und die senkrechte Ausrichtung der Autofördereinrichtung wird durch drei radiale Segmentlager 6 sichergestellt. Jede Autofördereinrichtung verfügt über eigenen Arretierflansch 15, der das Ausspringen aus dem axialen Lager verhindert. Der Drehantrieb wird durch zwei auf den Tragflächen 11 angebrachte Stepmotoren 12 geliefert, um die Torsionsspannungen zu vermeiden. Die Antriebsübertragung erfolgt mit Hilfe von Zahnrädern, wobei komplementäre unbewegliche Getriebe im Innenschacht angebracht ist. Die Autos werden durch die Zugvorrichtung auf den eigenen Rädern von- und auf den Lift transferiert. Die Steuerelektronik wird durch Computereinsatz unterstützt.

Die Abläufe im Parkhaus 1 sind durch die elektronische Steuerung gesteuert und überwacht.

An die zentrale Säule 3 sind mehrere Autofördereinrichtungen 4 befestigt.

Die Autofördereinrichtung besteht aus einem Hauptträger 5 und einem bzw. mehreren Hilfsträgern 5A.

Die Träger sind entlang der zentralen Säule 3 ausgerichtet. Der Hauptträger ist an die zentrale Säule mit Hilfe von Lagern 6, 7 so befestigt, dass die ganze Autofördereinrichtung 4 um die Säule drehbar ist.

Das Gewicht der Autofördereinrichtung wird durch ein axiales Lager 7 getragen. Die senkrechte Ausrichtung der Autofördereinrichtung entlang der Säule wird mit Hilfe von radialen Lagern 6 sichergestellt.

Das axiale Lager ruht auf dem an der zentralen Säule 3 ausgebildeten Lagerbett 7A. Eine Autofördereimichtung verfügt über eine liftähnliche Plattform 8.

Die Liftführung 9 besteht aus einem bzw. mehreren Trägern. Der Träger 5A bzw. die Träger sind so angeordnet, dass es genug Platz für die Führung des Plattformgegengewichtes 10 übrig bleibt.

Die Säule 3 ist auch ein Träger aller mechanischer und elektronischer Hilfseinrichtungen.

Auf dem oberen und unteren Ende der Autofördereinrichtung sind Tragplatformen 11 angebracht. Die Tragplatformen 11 sind Träger für die im den Betrieb der Autofördereinrichtung notwendigen mechanischen und elektronischen Geräte.

Auf der zentralen Säule sind die für die Ausführung der Drehbewegung durch die Autofördereinrichtung notwendige Einrichtungen angebracht.

## Patentansprüche

1. Zylinderförmiges Parkhaus (1) mit einem zentralen zylindrischen Innenschacht (2) und mit mehreren Parkebenen (14) mit sternförmig darauf angeordneten Parkplätzen (14A), mit Ein- und Ausfahrten, dass in der Mitte des zylindrischen Innenschachtes einefeststehende zentrale Säule (3) angeordnet ist und dass mindestens zwei voneinander unabhängig bewegbare Autofördereinrichtungen (4), welche je eine in vertikaler Richtung verschiebbare liftähnliche Plattform (8) sowie Träger (5A) besitzen, wobei einer oder mehrere von diesen Trägern (5A) als Plattformführung (8) dienen kann bzw. können, so dass entlang dieser Plattformführung eine Plattform und ein Plattformgegengewicht gleiten können, und die Autofördereinrichtungen (4) um die zentrale Säule drehbar an dieser gehalten sind, dadurch gekennzeichnet, dass die Säule (3) das einzige die Autofördereinrichtungen (4) tragende Element ist, und dass die Autofördereinrichtungen (4) aus einem oder mehreren in der axialen Richtung ausgerichteten Trägern besteht und dass mindestens einer von diesen Trägern (5) mit axialen und radialen Lagern an die Säule angebunden ist.

2. Parkhaus nach Anspruch 1, dadurch gekennzeichnet, dass die Bewegungen der Autofördereinrichtungen (4) durch eine elektronische Steuerung unabhängig voneinander steuerbar sind, wobei Mittel vorgesehen sind, um die Kollisionen zwischen den Autofördereinrichtungen zu vermeiden.

3. Parkhaus nach den Ansprüchen 1 bis 2, dadurch gekennzeichnet, dass die Säule als tragendes Element für die im Parkhausbetrieb verwendeten mechanischen, elektronischen und motorischen Einrichtungen ausgebildet ist.

4. Parkhaus nach einem der Ansprüche 1 bis 3, dadurch gekennzeichnet, dass das Gewicht der Autofördereinrichtung durch ein oder mehrere Lager (7) getragen wird und die senkrechte Ausrichtung der Autofördereinrichtungen entlang der zentralen Säule durch mehrere radiale Lager (6) sichergestellt wird.

5. Parkhaus nach einem der Ansprüche 1 bis 4, dadurch gekennzeichnet, dass an einen oder mehreren von diesen Trägern oberhalb der obersten Etage und unterhalb der untersten Etage eine oder mehrere Tragplattformen (11) für das Aufstellen von Motoren (13),(12) und anderen für den Betrieb der Autofördereinrichtungen notwendigen Hilfseinrichtungen angebracht sein können.

## Claims

1. A cylinder-shaped parking garage (1) with a central cylindrical inner shaft (2) and with a plurality of parking levels (14) with parking spaces (14A) arranged in a star pattern thereon and with entrances and exists, that in the center of the cylindrical inner shaft is disposed a stationary central column (3) and that at least two car conveying devices (4) are provided which can be moved independently of each other, each with elevator-like platform (8) displaceable in the vertical direction and supports (5A), whereby one or a plurality of these supports (5A) can be used as a platform guidance (8), so that a platform and a platform counterweight can slide along this platform guidance, and that the conveying devices (4) are rotatable supported by the central column (3), characterized in that the stationary central column (3) is the only element carrying the weight of the conveying devices (4) and that the conveying devices (4) consist of one or of a plurality of supports (5) aligned in the axial direction and that at least one of these supports (5) is fastened to the column by means of axial and radial bearings.

2. A parking garage in according with claim 1, characterized in that the movements of the car conveying devices (4) can be controlled by an electronic control independently of each other, wherein means are provided for preventing collisions between the car conveying devices.

3. A parking garage in accordance with claims 1 to 3, characterized in that the column is equipped to be the support element for the mechanical, electronic and motor devices employed in the operation of the parking garage.

4. A parking garage in accordance with one of claims 1 to 4, characterized in that the weight of the car conveying device is supported by one or a plurality of bearings (7) and the vertical alignment of the car conveying devices along the central column is assured by a plurality of radial bearings (6).

5. A parking garage in accordance with one of the claims 1 to 4 characterized in that it is possible to dispose one or plurality of platform s (11) for placing motors (13), (12) and other auxiliary devices required for the operation of the car conveying device on one or plurality of these supports above the top floor and below the ground floor.

## Revendications

1. Parking à plusieurs étages de forme cylindrique (1) avec une cage centrale cylindrique (2) et plusieurs niveaux de stationnement (14) aux places disposées en étoile (14A), avec des voies d'entrée et de sortie, le cas étant qu'au milieu de la cage cylindrique se trouve une colonne centrale fixe (3) et qu'au moins deux installations de transport d'automobiles mobiles et indépendantes l'une de l'autre (4), chacune comptant une plate-forme pouvant être déplacée verticalement tel un ascenseur (8) et des supports (5A), un ou plusieurs de ces supports (5A) servant ou pouvant servir de guide de plate-forme (8), de façon qu'une plate-forme et un contrepoids pour celle-ci puissent glisser le long de ce guide, et les installations de transport d'automobiles (4) etant fixées à cette colonne centrale et peuvent tourner autour de l'axe de celle-ci, la caractéristique étant que la colonne (3) est le seul élément de support des installations de transport d'automobiles (4) et que ces installations de transport d'automobiles (4) consistent d'un ou de plusieurs supports orientés de façon axiale et qu'au moins un de ces supports (5) est attaché à la colonne au moyen de paliers axiaux et radiaux.

2. Parking à plusieurs étages selon la revendication 1, caractérisé par le fait que les mouvements des installations de transport d'automobiles (4) peuvent être commandées individuellement à partir d'une commande électronique, des moyens étant prévus pour éviter les collisions entre les différentes installations de transport.

3. Parking à plusieurs étages selon les revendications 1 et 2 avec la particularité que la colonne servant d'élément porteur est conçue de façon à contenir les installations mécaniques, électroniques et les moteurs utilisés dans l'exploitation du parking.

4. Parking à plusieurs étages selon les revendications 1 à 3 avec la particularité que le poids de l'installation de transport d'automobiles est porté par un ou plusieurs paliers (7) et que l'alignement vertical des installations de transport d'automobiles le long de la colonne centrale est assuré par plusieurs paliers radiaux (6).

5. Parking à plusieurs étages selon les revendications 1 à 4, caractérisé par le fait qu'à un ou à plusieurs de ces supports situés au dessus de l'étage le plus haut et en dessous de l'étage le plus bas il est possible de fixer une ou plusieurs plates-formes porteuses (11) pour le placement de moteurs (13),(12) et d'autres installations accessoires nécessaires pour l'exploitation des installations de transport d'automobiles.
